# EUROPÄISCHE PATENTANMELDUNG

(11) **EP 3 064 299 A1**
(43) Veröffentlichungstag der Anmeldung: **07.09.2016**
(21) Anmeldenummer: 16158527.8
(22) Anmeldetag: 03.03.2016
(51) Int. Cl.: B23B 27/16

(54) **WERKZEUGHALTER FÜR EIN SCHNEIDWERKZEUG MIT EINER STÜTZPLATTE, EINER SCHNEIDPLATTE MIT VERDREHSICHERUNG**

(30) Priorität: 06.03.2015 DE 102015204082
(71) Anmelder: CeramTec GmbH, 73207 Plochingen (DE)
(72) Erfinder: Löhning, Stefan, 78073 Bad Dürrheim (DE); Möck, Jochen, 72818 Trochtelfingen (DE)
(74) Vertreter: Uppena, Franz

(57) **Zusammenfassung**

Die Erfindung betrifft einen Werkzeughalter (1) für ein Schneidwerkzeug mit einer Stützplatte (2), einer Schneidplatte (3) und einer Spannpratze (4), wobei die Stützplatte (2) in einem Stützplattensitz (5) auf dem Werkzeughalter (1) befestigt ist und an einer Stützplattenanlagefläche (6) am Werkzeughalter (1) anliegt, die Schneidplatte (3) sich in einem Schneidplattensitz (7) auf der Stützplatte (2) befindet und an eine Schneidplattenanlagefläche (8) am Werkzeughalter (1) anliegt und die Spannpratze (4) auf dem Werkzeughalter (1) befestigt ist und mit einer Spannnase (9) die Schneidplatte (3) auf die Stützplatte (2) drückt und gleichzeitig an die Schneidplattenanlagefläche (8) zieht.

Damit eine Schneidplatte und eine Stützplatte funktionssicher nur in zwei Einbaulagen auf dem Werkzeughalter zu befestigen sind, wird vorgeschlagen, dass die Stützplatte (2) und die Schneidplatte (3) rund ausgebildet sind und auf ihren Umfangsflächen jeweils zwei in Bezug auf die Längsachse (10) gegenüberliegende Positionierflächen (11, 12) aufweisen, die von der runden Ausbildung abweichen, die Stützplattenanlagefläche (6) und die Schneidplattenanlagefläche (8) an die Positionierflächen (11, 12) angepasst sind und ein Befestigen der Stützplatte (2) und der Schneidplatte (3) auf dem Werkzeughalter (1) nur möglich ist, wenn die Positionierfläche (12) der Stützplatte (2) an der Stützplattenanlagefläche (6) und die Positionierfläche (11) der Schneidplatte (3) an der Schneidplattenanlagefläche (8) anliegt.

## Beschreibung

Die Erfindung betrifft einen Werkzeughalter für ein Schneidwerkzeug mit einer Stützplatte, einer Schneidplatte und einer Spannpratze, wobei die Stützplatte in einem Stützplattensitz auf dem Werkzeughalter befestigt ist und an einer Stützplattenanlagefläche am Werkzeughalter anliegt, die Schneidplatte sich in einem Schneidplattensitz auf der Stützplatte befindet und an eine Schneidplattenanlagefläche am Werkzeughalter anliegt und die Spannpratze auf dem Werkzeughalter befestigt ist und mit einer Spannnase die Schneidplatte auf die Stützplatte drückt und gleichzeitig an die Schneidplattenanlagefläche zieht.

Der Erfindung liegt die Aufgabe zugrunde, einen Werkzeughalter nach dem Oberbegriff des Anspruchs 1 so zu verbessern, dass eine Schneidplatte und eine Stützplatte funktionssicher nur in zwei Einbaulagen auf dem Werkzeughalter zu befestigen sind.

Erfindungsgemäß wird diese Aufgabe dadurch gelöst, dass die Stützplatte und die Schneidplatte rund ausgebildet sind und auf ihren Umfangsflächen jeweils zwei in Bezug auf die Längsachse gegenüberliegende Positionierflächen aufweisen, die von der runden Ausbildung abweichen, die Stützplattenanlagefläche und die Schneidplattenanlagefläche an die Positionierflächen angepasst sind und ein Befestigen der Stützplatte und der Schneidplatte auf dem Werkzeughalter nur möglich ist, wenn die Positionierfläche der Stützplatte an der Stützplattenanlagefläche und die Positionierfläche der Schneidplatte an der Schneidplattenanlagefläche anliegt. Durch die Positionierflächen sowohl an der Stützplatte als auch an der Schneidplatte und die zugehörige Stützplattenanlagefläche und Schneidplattenanlagefläche am Werkzeughalter, die von der runden Form abweichen, ist ein Einbau nur in den vorgegebenen Einbaulagen möglich und damit ein falscher Einbau verhindert.

Bevorzugt ist die Schneidplatte aus einer gesinterten Keramik, wie Aluminiumoxid oder Aluminiumnitrid oder aus CBN gefertigt.

Zur Befestigung der Stützplatte auf dem Werkzeughalter weist die Stützplatte auf ihrer der Schneidplatte abgewandten Unterseite bevorzugt einen Zapfen auf, der in eine angepasste Bohrung im Stützplattensitz eingreift. Wenn der Zapfen und die Bohrung im Querschnitt unrund ausgebildet ist, ist eine zusätzliche Verdrehsicherung gewährleistet.

Zur radialen Sicherung der Schneidplatte auf der Stützplatte weist bevorzugt die Stützplatte auf ihrer zur Schneidplatte gewandten Oberseite einen äußeren umlaufenden Kragen zur seitlichen Stütze der Schneidplatte auf.

Vorteilhafterweise weist die Schneidplatte eine Ober- und eine Unterseite und eine Umfangsfläche auf und ist der Übergang von der Umfangsfläche zur Unterseite als Kante ausgebildet und mündet die Positionierflächen von der Kante ausgehend bogenförmig in die Umfangsfläche ein.

Vorteilhafterweise sind die Positionierflächen auf der Umfangsfläche der Schneidplatte zur Längsachse der Schneidplatte geneigt und lassen sich daher leichter herstellen und eine Verdrehsicherung verhindern.

Jede Positionierfläche auf der Umfangsfläche der Stützplatte ist in einer Ausführungsform der Erfindung als Ebene ausgebildet ist, die parallel zur Längsachse der Stützplatte verläuft. Die Positionierfläche ist dadurch eine ebene Fläche und einfach herzustellen, bei vorzüglicher Verdrehsicherung.

Eine erfindungsgemäße runde Schneidplatte mit einer Ober- und Unterseite und einer diese beiden Flächen verbindenden Umfangsfläche zur Verwendung für einen Werkzeughalter nach einem der Ansprüche 1 bis 6 ist dadurch gekennzeichnet, dass auf der Umfangsfläche zwei in Bezug auf die Längsachse gegenüberliegende ebene Positionierflächen angeordnet sind, die zur Längsachse der Schneidplatte geneigt sind.

Die Erfindung ermöglicht den prozesssicheren Einsatz von Schneidplatten, insbesondere von RBGN-Wendeschneidplatten. Speziell geht es um das Positionieren der Schneidplatte in zwei Einbaulagen, die voneinander durch eine Drehung um 180 Grad gekennzeichnet sind.

Die Positionierfläche an der Stützplatte und der Schneidplatte mit der zugehörigen Schneidplattenanlagefläche und Stützplattenanlagefläche im Werkzeughalter dienen sowohl zur Positionierung als auch Verdrehsicherung. Damit ist gewährleistet, dass im Fall von Standzeitende des 1. Schneidkantensegmentes der Schneidplatte, beim Drehen der Wendeschneidplatte um 180 Grad, das 2. Schneidkantensegment voll zur Verfügung steht.

Nachfolgend wird die Erfindung anhand von vier Figuren weiter erläutert.

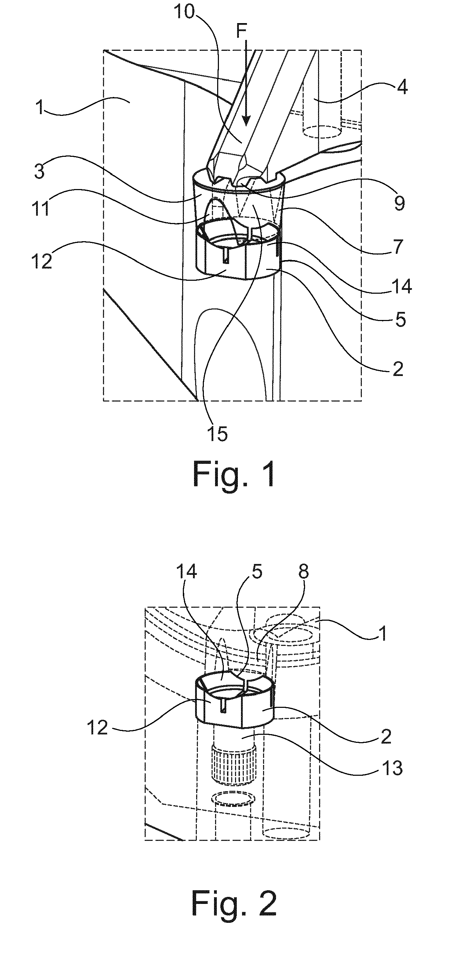

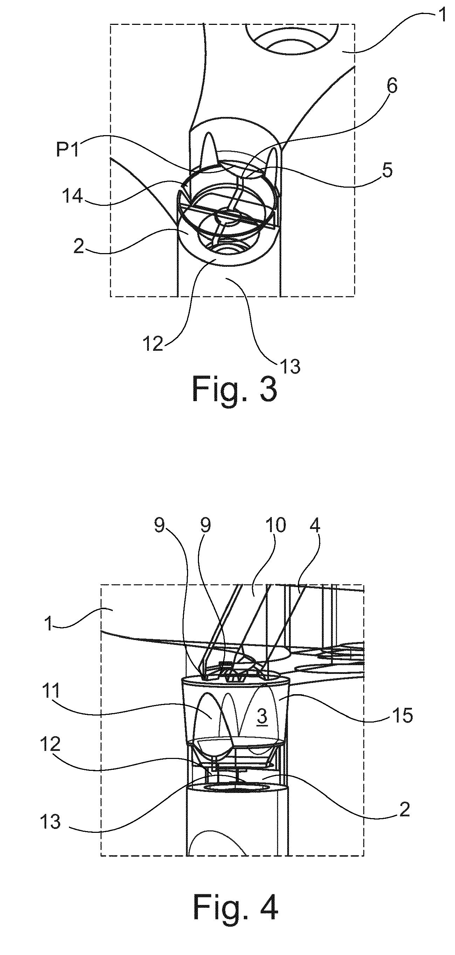

Figur 1 zeigt einen erfindungsgemäßen Werkzeughalter 1 für ein Schneidwerkzeug zur Zerspanung. Der Werkzeughalter 1 besteht aus einem Grundkörper auf dem eine Stützplatte 2, eine Schneidplatte 3 und eine Spannpratze 4 angeordnet sind, wobei die Stützplatte 2 in einem Stützplattensitz 5 auf dem Werkzeughalter 1 befestigt ist und an einer Stützplattenanlagefläche 6 am Grundkörper des Werkzeughalters 1 anliegt. Der Stützplattensitz 5 und die Stützplattenanlagefläche 6 sind in den Figuren 2 und 3 besser zu erkennen. Die Schneidplatte 3 befindet sich in einem Schneidplattensitz 7 auf der Stützplatte 2 und liegt an einer Schneidplattenanlagefläche 8 am Werkzeughalter 1 an. Dies ist besser an den Figuren 3 und 4 gezeigt. Die Spannpratze 4 ist, wie im Stand der Technik üblich, auf dem Grundkörper des Werkzeughalters 1 befestigt (nicht gezeigt) und drückt mit einer Spannnase 9 die Schneidplatte 3 auf die Stützplatte 2 und zieht die Schneidplatte gleichzeitig an die Schneidplattenanlagefläche 8. Die Stützplatte 2 und die Schneidplatte 3 sind rund ausgebildet. Mit runder Ausbildung sind besonders die Oberseiten gemeint, die rund sind. Die der Stützplatte abgewandte runde Oberseite der Schneidplatte geht über die Schneidkante in die Umfangsfläche 15 über. Die Umfangsfläche 15 geht durchmesserverringerd über die untere Kante in die Unterseite über. Diese Unterseite liegt auf der Stützplatte 2 auf. Auf der Umfangsfläche 15 befinden sich zwei in Bezug auf die Längsachse 10 gegenüberliegende Positionierflächen 11. An den beiden Positionierflächen 11 weicht die Umfangsfläche von der runden Ausführung ab. Die Stützplatte 2 ist ebenso rund ausgebildet und weist auf ihrer Umfangsfläche ebenso zwei Positionierflächen 12 auf. Auch an diesen Stellen weicht die Stützplatte von der runden Ausführung ab. Die genannten Positionierflächen 11, 12 liegen jeweils an einer dieser angepassten Stützplattenanlagefläche 6 und Schneidplattenanlagefläche 8 an. Ein wesentliches Merkmal der Erfindung ist, dass ein Befestigen der Stützplatte 2 und der Schneidplatte 3 auf dem Werkzeughalter 1 nur möglich ist, wenn die Positionierfläche 12 der Stützplatte 2 an der Stützplattenanlagefläche 6 und die Positionierfläche 11 der Schneidplatte 3 an der Schneidplattenanlagefläche 8 anliegt.

Figur 2 zeigt einen Ausschnitt aus dem Werkzeughalter 1 gemäß Figur 1. Es ist nur die Stützplatte 2 zu sehen, die in ihrem Stützplattensitz 5 sitzt. Die Stützplatte 2 auf ihrer der Schneidplatte 3 abgewandten Unterseite weist einen Zapfen 13 auf, der in eine angepassten Bohrung 14 im Stützplattensitz 5 eingreift. Bevorzugt ist der Zapfen 13 in axialer Richtung geriffelt, d.h. mit axialen Rippen versehen.

Die Stützplatte 2 weist auf ihrer zur Schneidplatte 3 gewandten Oberseite einen äußeren umlaufenden Kragen 14 auf, der in axialer Richtung geschlitzt ist. Dieser Kragen 14 dient zur seitlichen Stütze der Schneidplatte 3.

Figur 3 zeigt die Anordnung von Figur 3 von einer anderen Blickrichtung. Es ist deutlich die Stützplattenanlagefläche 6 und die Schneidplattenanlagefläche 8 zu erkennen. 6. Beide Positionierflächen 12 auf der Umfangsfläche der Stützplatte 2 sind als Ebene ausgebildet, die parallel zur Längsachse der Stützplatte 2 verläuft.

Figur 4 zeigt besonders hervorgehoben die Schneidplatte 3, die auf der Stützplatte 2 aufsitzt und von einer Spannnase 9 der Spannpratze 4 auf die Stützplatte 2 gedrückt wird. Die Schneidplatte 3 liegt mit ihrer Positionierfläche 11 an der Schneidplattenanlagefläche 8 anliegt.

Die Schneidplatte 3 weist eine Ober- und eine Unterseite und eine Umfangsfläche 15 aufweist und der Übergang von der Umfangsfläche 15 zur Unterseite ist als Kante ausgebildet. Die zwei Positionierflächen 11 münden von der Kante ausgehend bogenförmig in die Umfangsfläche 15 ein. Beide Positionierflächen 11 auf der Umfangsfläche 15 der Schneidplatte 3 sind zur Längsachse 10 der Schneidplatte 3 geneigt.

Die Figuren zeigen somit eine Wendeschneidplatte 3 (RBGN-WSP) mit zwei Positionierflächen 11, die um 180 Grad versetzt sind.

Zur zentrischen Aufnahme der runden Wendeschneidplatte 3 dient eine runde Stützplatte 2, welche ebenfalls zwei Positionierflächen 12 aufweist, welche analog der Wendeschneidplatte um 180 Grad versetzt sind. Die Stützplatte 2 wird mittels Zapfen 13 und Bohrung (siehe Figur 2) im Plattensitz aufgenommen.

Zur zentrischen Aufnahme der runden Wendeschneidplatte dient somit eine runde Stützplatte welche ebenfalls zwei Positionierflächen 12 aufweist, welche analog der Wendeschneidplatte um 180 Grad versetzt sind. Die Spannkraft F (siehe Figur 1), erzeugt durch die Spannnase 9 der Spannpratze 4 drückt die runde Schneidplatte 3 in die Stützplatte 2 und damit in den Schneidplattensitz 7.

## Patentansprüche

1. Werkzeughalter (1) für ein Schneidwerkzeug mit einer Stützplatte (2), einer Schneidplatte (3) und einer Spannpratze (4), wobei die Stützplatte (2) in einem Stützplattensitz (5) auf dem Werkzeughalter (1) befestigt ist und an einer Stützplattenanlagefläche (6) am Werkzeughalter (1) anliegt, die Schneidplatte (3) sich in einem Schneidplattensitz (7) auf der Stützplatte (2) befindet und an eine Schneidplattenanlagefläche (8) am Werkzeughalter (1) anliegt und die Spannpratze (4) auf dem Werkzeughalter (1) befestigt ist und mit einer Spannnase (9) die Schneidplatte (3) auf die Stützplatte (2) drückt und gleichzeitig an die Schneidplattenanlagefläche (8) zieht, **dadurch gekennzeichnet, dass** die Stützplatte (2) und die Schneidplatte (3) rund ausgebildet sind und auf ihren Umfangsflächen jeweils zwei in Bezug auf die Längsachse (10) gegenüberliegende Positionierflächen (11, 12) aufweisen, die von der runden Ausbildung abweichen, die Stützplattenanlagefläche (6) und die Schneidplattenanlagefläche (8) an die Positionierflächen (11, 12) angepasst sind und ein Befestigen der Stützplatte (2) und der Schneidplatte (3) auf dem Werkzeughalter (1) nur möglich ist, wenn die Positionierfläche (12) der Stützplatte (2) an der Stützplattenanlagefläche (6) und die Positionierfläche (11) der Schneidplatte (3) an der Schneidplattenanlagefläche (8) anliegt.

2. Werkzeughalter nach Anspruch 1, **dadurch gekennzeichnet, dass** die Stützplatte (2) auf ihrer der Schneidplatte (3) abgewandten Unterseite einen Zapfen (13) aufweist, der in eine angepasste Bohrung (14) im Stützplattensitz (5) eingreift.

3. Werkzeughalter nach Anspruch 1 oder 2, **dadurch gekennzeichnet, dass** die Stützplatte (2) auf ihrer zur Schneidplatte (3) gewandten Oberseite einen äußeren umlaufenden Kragen (14) zur seitlichen Stütze der Schneidplatte (3) aufweist.

4. Werkzeughalter nach einem der Ansprüche 1 bis 3, **dadurch gekennzeichnet, dass** die Schneidplatte (3) eine Ober- und eine Unterseite und eine Umfangsfläche (15) aufweist und der Übergang von der Umfangsfläche zur Unterseite als Kante ausgebildet ist und die Positionierflächen (11) von der Kante ausgehend bogenförmig in die Umfangsfläche (15) einmünden.

5. Werkzeughalter nach einem der Ansprüche 1 bis 4, **dadurch gekennzeichnet, dass** die Positionierflächen (11) auf der Umfangsfläche (15) der Schneidplatte (3) zur Längsachse (10) der Schneidplatte (3) geneigt sind.

6. Werkzeughalter nach einem der Ansprüche 1 bis 5, **dadurch gekennzeichnet, dass** jede Positionierfläche (12) auf der Umfangsfläche der Stützplatte (2) als Ebene ausgebildet ist, die parallel zur Längsachse der Stützplatte (2) verläuft.

7. Runde Schneidplatte (3) mit einer Ober- und Unterseite und einer diese beiden Flächen verbindenden Umfangsfläche (15) zur Verwendung für einen Werkzeughalter (1) nach einem der Ansprüche 1 bis 6, **dadurch gekennzeichnet, dass** auf der Umfangsfläche (15) zwei in Bezug auf die Längsachse (10) gegenüberliegende ebene Positionierflächen (11) angeordnet sind, die zur Längsachse (10) der Schneidplatte (3) geneigt sind.
